# FASCICULE DE BREVET EUROPEEN

(11) **EP 3 019 326 B1**
(45) Date de publication et mention de la délivrance du brevet: **09.09.2020**
(21) Numéro de dépôt: 14739114.8
(22) Date de dépôt: 09.07.2014
(51) Int. Cl.: B29C 49/56, B29C 49/08, B29C 49/36

(54) **UNITÉ DE MOULAGE DE RÉCIPIENTS EN MATIÈRE THERMOPLASTIQUE COMPORTANT DES MOYENS DE COMPENSATION**
EINHEIT ZUM FORMEN VON BEHÄLTERN AUS EINEM THERMOPLASTISCHEN KUNSTSTOFF MIT KOMPENSATIONSVORRICHTUNG
UNIT FOR MOLDING VESSELS MADE OF A THERMOPLASTIC MATERIAL COMPRISING COMPENSATION MEANS

(30) Priorité: 11.07.2013 FR 1356814
(43) Date de publication de la demande: 18.05.2016
(73) Titulaire: Sidel Participations, 76930 Octeville-sur-Mer (FR)
(72) Inventeur: MICHEL, Jocelyn, 76930 Octeville sur Mer (FR); LECOMTE, Frédéric, 76930 Octeville sur Mer (FR)
(74) Mandataire: Grassin d'Alphonse, Emmanuel Jean Marie
(86) Numéro de dépôt international: PCT/EP2014/064680
(87) Numéro de publication internationale: WO 2015/004172

(56) Documents cités:
- EP-A1- 1 535 719
- DE-U1- 20 007 429
- FR-A1- 2 856 334

## Description

L'invention concerne une unité de moulage de récipients en matière thermoplastique comportant des moyens de compensation.

L'invention concerne plus particulièrement une unité de moulage d'au moins un récipient à partir d'une préforme en matière thermoplastique, ladite unité de moulage comportant au moins :
- un moule comportant au moins deux éléments de moulage montés respectivement dans deux porte-moules, l'un au moins des porte-moules étant monté mobile en rotation par rapport à l'autre autour d'un axe de rotation et pouvant être déplacé entre une position ouverte et une position fermée de l'unité, position fermée dans laquelle les éléments de moulage sont réunis suivant un plan de joint et délimitent une cavité de moulage,
- des moyens de soufflage ou d'étirage-soufflage pour introduire à l'intérieur de la préforme au moins un fluide de soufflage sous pression en vue du moulage du récipient correspondant dans la cavité,
- des moyens de verrouillage de l'unité susceptibles d'occuper au moins :
   - une position verrouillée dans laquelle les porte-moules de l'unité de moulage sont maintenus dans ladite position fermée, et
   - une position déverrouillée dans laquelle les porte-moules de l'unité de moulage sont mobiles par rapport à l'autre,
- et des moyens de compensation commandés pour exercer, au moyen d'un fluide sous pression, un effort de compensation tendant à serrer l'un contre l'autre les éléments de moulage au niveau du plan de joint et à s'opposer aux efforts que ledit au moins un fluide de soufflage sous pression exerce sur les éléments de moulage lors du moulage d'un récipient à partir d'une préforme.

On connaît de l'état de la technique une unité de moulage de ce type qui est destinée à être montée sur une machine (encore appelée "souffleuse") et utilisée pour la fabrication de récipients à partir de préformes en matière thermoplastique.

La fabrication de récipients (bouteilles, flacons, pots, etc.) en matière thermoplastique comme le PET (Polyéthylène Téréphtalate) est réalisée dans une telle unité de moulage notamment par soufflage ou par étirage-soufflage au moyen d'au moins un fluide de soufflage sous pression, tel que de l'air, qui est introduit à l'intérieur d'une préforme chaude pour former ledit récipient.

A titre d'exemple non limitatif, on pourra se reporter au document WO-99/03667 qui décrit une installation pour la fabrication de récipients stériles. Les documents FR2856334 et DE 20007429 décrivent des unités de moulage.

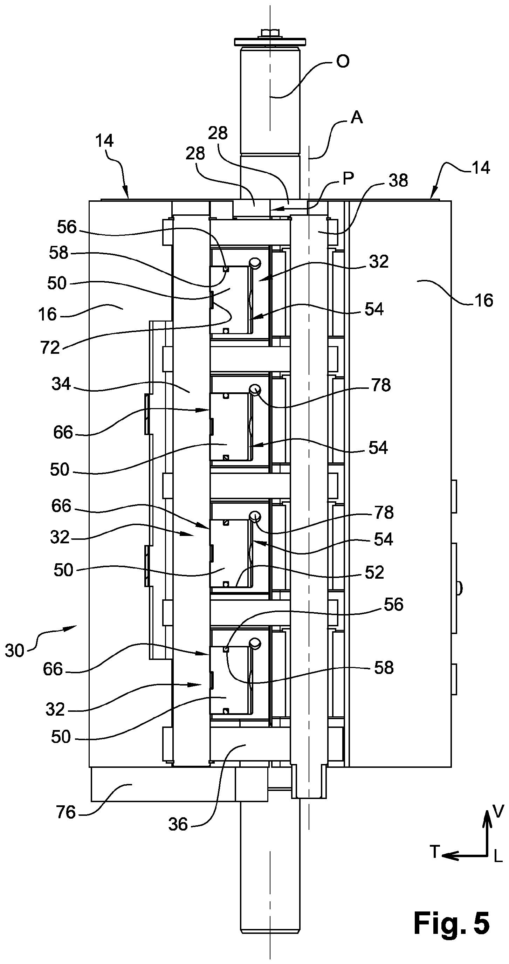

La figure 5 du document représente plus particulièrement une installation comportant une machine (ou "souffleuse") équipée de plusieurs unités de moulage qui sont réparties circonférentiellement sur tout le pourtour d'un carrousel de la machine.

La fabrication d'un récipient est obtenue à partir d'une préforme chaude dont le corps est préalablement conditionné thermiquement dans un four, puis le corps de la préforme est introduit à l'intérieur du moule de l'une des unités de moulage. L'air de soufflage sous pression est ensuite introduit à l'intérieur de la préforme par le col pour obtenir un récipient correspondant à la cavité de moulage que délimitent les éléments de moulage réunis.

Les pressions mises en jeu lors du soufflage du récipient sont élevées, atteignant des valeurs allant jusqu'à 30 ou 40 bars. Il en résulte que, en plaquant la paroi du corps de la préforme contre l'empreinte de la cavité de moulage lors du soufflage, l'air sous pression exerce des efforts importants sur la surface de chacun des éléments de moulage.

C'est l'une des raisons pour laquelle, l'unité de moulage est pourvue d'un dispositif de verrouillage dont les moyens de verrouillage sont, en position verrouillée, aptes à maintenir les porte-moules en position fermée y compris et en particulier lors du moulage du récipient par soufflage ou par étirage-soufflage.

Les moyens de verrouillage du moule en position fermée présentant un jeu fonctionnel propre à tout dispositif mécanique, les deux éléments de moulage vont s'écarter l'un de l'autre sous l'effet de la pression exercée par le fluide de soufflage de sorte que, lors du soufflage du récipient, un faible jeu apparaît alors entre les éléments de moulage au niveau du plan de joint.

Or, l'apparition d'un tel jeu entre les deux éléments de moulage a des incidences sur la qualité du récipient obtenu.

D'une part, la résistance mécanique du récipient en est affectée au niveau du plan de joint et, d'autre part, l'esthétisme l'est également avec la présence d'un "trait" caractéristique sur le récipient fabriqué.

Une solution connue de l'état de la technique pour au moins réduire ce jeu entre les éléments de moulage consiste à équiper l'unité de moulage de moyens de compensation qui sont formés par une chambre de compensation, ladite chambre étanche à volume variable étant interposée entre l'un des éléments de moulage et le porte-moule associé.

Pour de plus amples détails sur une telle solution, on pourra par exemple se reporter aux documents FR-2.659.265 ou EP-1.880.826 ouEP1535719 donnés toutefois à titre non limitatif.

On rappellera ci-après le fonctionnement d'une chambre de compensation. La chambre de compensation est destinée à être alimentée sélectivement, avec un fluide sous pression formé par de l'air, suivant un cycle de compensation qui est synchronisé avec la fabrication du récipient.

Lors de la fabrication d'un récipient, la compensation est mise en œuvre après la fermeture et le verrouillage de l'unité de moulage et avant le moulage du récipient par soufflage (ou par étirage-soufflage) d'une préforme au moyen d'un fluide de soufflage sous pression, généralement constitué par de l'air.

La mise en pression de la chambre de compensation est obtenue en l'alimentant en air sous pression. Sous l'effet de la pression, il en résulte une expansion de la chambre de compensation interposée entre l'élément de moulage et le porte-moule.

La mise sous pression de la chambre de compensation provoque un déplacement relatif de l'élément de moulage et du porte-moule, notamment permis par la présence d'un jeu entre les éléments de moulage.

L'expansion de la chambre de compensation tend à écarter l'un de l'autre les porte-moules, à ouvrir l'unité de moulage. Cependant, les porte-moules sont maintenus en position fermée de l'unité par des moyens de verrouillage.

Grâce aux moyens de verrouillage, l'effort découlant de la mise en pression de la chambre de compensation va principalement s'exercer par réaction sur l'élément de moulage adjacent qui se trouve poussé en direction de l'autre élément de moulage situé en vis-à-vis.

L'effort de compensation résultant de la mise en pression de la chambre tend par conséquent à serrer l'un contre l'autre lesdits éléments de moulage au niveau du plan de joint et ce faisant à réduire, à tout le moins, le jeu qui existait auparavant entre lesdits éléments de moulage.

La compensation permet donc le rattrapage de tout ou partie du jeu existant entre les éléments de moulage au niveau du plan de joint lorsque les porte-moules sont en position fermée, ledit jeu étant délimité par les faces des éléments de moulage autour de l'empreinte de moulage réalisée en creux et correspondant au récipient.

La compensation perdure ainsi pour autant que, lors du soufflage du récipient, l'effort de poussée appliqué par l'air sous pression contenu dans la chambre de compensation soit supérieur aux efforts appliqués par l'air de soufflage sur la surface de la cavité de moulage.

Les valeurs de pression de l'air utilisé pour la chambre de compensation sont donc élevées, jusqu'à 40 bars, tout comme le sont celles de l'air de soufflage utilisé pour mouler le récipient.

Lorsque la chambre de compensation est mise en pression, l'effort de compensation s'oppose aux efforts de sens contraire que la pression de l'air de soufflage de la préforme applique sur la cavité et qui tendent à écarter à nouveau l'un de l'autre les éléments de moulage.

L'effort de compensation obtenu est principalement déterminé par la surface de la chambre de compensation et la pression de l'air qui y est introduit, et l'effort de compensation nécessaire est notamment fonction de la surface de la cavité de moulage et de la pression de soufflage.

Dans une unité de moulage comportant une chambre de compensation, l'effort de compensation résultant de la mise en pression s'applique sur la face externe de l'élément de moulage, soit la face opposée à l'empreinte formant la cavité. L'effort de poussée s'applique sur la surface de la face en contact avec la chambre de compensation.

Une fois le récipient formé, le cycle de compensation s'achève par un échappement pour remettre la chambre de compensation à la pression atmosphérique et permettre l'ouverture du moule afin d'en extraire le récipient fabriqué.

Grâce à une chambre de compensation, on améliore la qualité du récipient fabriqué en réduisant le jeu entre les éléments de moulage au niveau du plan de joint de manière que lesdits éléments de moulage soient jointifs et leurs faces respectives accolées, en particulier pendant le moulage du récipient.

Cependant, une telle solution ne donne pas entière satisfaction et présente différents inconvénients. L'intégration d'une telle chambre de compensation à une unité de moulage n'est pas toujours aisée et s'avère coûteuse.

Une telle implantation pose des problèmes de coûts de maintenance pour garantir la fiabilité de l'étanchéité, notamment en raison des cadences élevées de fabrication atteintes sur une machine.

L'utilisation d'air sous pression comme fluide pour la compensation et sa mise à l'échappement après chaque cycle de fabrication d'un récipient se traduit par une consommation importante d'énergie pour obtenir la mise sous pression de l'air, en raison notamment de la nature compressible de l'air.

La chambre de compensation provoque également d'importantes contraintes mécaniques tant sur les moyens de verrouillage et que sur les porte-moules de l'unité de moulage.

De telles contraintes mécaniques exigent par conséquent une attention particulière lors de la conception et du choix des matériaux pour limiter les déformations.

Le but de la présente invention est notamment de remédier aux inconvénients précités et de proposer une nouvelle solution permettant de réaliser de manière simple, économique et fiable la fonction de compensation dans une unité de moulage de récipients à partir de préformes en matière thermoplastique.

Dans ce but, l'invention propose une unité de moulage du type décrit précédemment, caractérisée en ce que les moyens de compensation agissent sur les porte-moules pour les serrer l'un contre l'autre en position fermée de l'unité de moulage et exercer ledit effort de compensation.

Par comparaison avec une chambre de compensation selon l'état de la technique, les moyens de compensation selon l'invention agissent directement sur les porte-moules et non plus sur l'un des éléments de moulage.

Avantageusement, les moyens de compensation de l'unité sont portés par les porte-moules. Les moyens de compensation de l'unité solidaires des porte-moules sont ainsi indépendants des éléments de moulage qui sont destinés à y être montés.

Les moyens de compensation demeurent en permanence sur les porte-moules d'une unité de moulage tandis que les éléments de moulage d'une unité donnée sont eux changés en fonction du récipient à fabriquer.

Grâce au fait que les moyens de compensation selon l'invention soient associés aux porte-moules de l'unité de moulage, tant la conception que la fabrication des éléments de moulage destinés à y être montés sont simplifiées.

Avantageusement, la fonction de compensation est réalisée à moindre coût puisque les moyens de compensation équipent une unité de moulage et non plus chacun des éléments de moulage pouvant y être montés pour fabriquer différents récipients.

Avantageusement, les moyens de compensation exercent l'effort de compensation sur les porte-moules et en serrant les porte-moules l'un contre l'autre provoquent au moins une réduction du jeu existant entre les faces des éléments de moulage qui déterminent le plan de joint, lesdites faces étant rapprochées l'une de l'autre du fait de l'effort de compensation obtenu avec le fluide sous pression, dit fluide de compensation.

Comme une chambre de compensation selon l'état de la technique, les moyens de compensation selon l'invention utilisent un fluide sous pression pour obtenir ledit effort de compensation et se distinguent en cela des moyens de verrouillage.

Avantageusement, le fluide de compensation est un fluide incompressible. La consommation énergétique pour réaliser la mise en pression du fluide hydraulique utilisé pour la compensation est avantageusement moindre que celle requise pour l'air avec une chambre de compensation.

Avantageusement, les moyens de compensation assurent également la fonction de verrouillage des porte-moules en position fermée de l'unité, en particulier lors du moulage par soufflage ou étirage-soufflage du récipient.

Grâce à la double fonction de compensation et de verrouillage assurée par les moyens de compensation, les moyens de verrouillage conventionnels de l'unité de moulage sont supprimés.

Avantageusement, les moyens de compensation sont agencés au voisinage du bord libre de chacun des porte-moules au bénéfice d'une amélioration de la compacité générale de l'unité de moulage, en particulier sur une machine lorsque l'unité est en position ouverte par rapport à d'autres unités adjacentes.

Ainsi, plus l'unité de moulage est compacte et présente un faible encombrement en position ouverte, plus le nombre d'unités de moulage pouvant être implantées sur une machine augmente et corolairement ses capacités de fabrication de récipients.

L'effort de compensation est appliqué sur les bords libres des porte-moules, soit suivant le plan de joint des éléments de moulage de l'unité en position fermée, diamétralement à l'opposé de l'axe de rotation des porte-moules.

Avantageusement, l'effort de compensation appliqué s'exerce avec un effet de levier par rapport à l'axe de rotation qui correspond à chacun des porte-moules.

Par comparaison avec l'effort de compensation obtenu avec une chambre de compensation, on obtient une compensation équivalente en appliquant un effort de compensation sur les bords libres des porte-moules qui est inférieur du fait de l'effet amplificateur correspondant au bras de levier.

Grâce à quoi, pour un même effort de compensation, les moyens de compensation selon l'invention offrent en utilisation un meilleur rendement énergétique que ceux d'une chambre de compensation selon l'état de la technique.

Selon d'autres caractéristiques de l'invention :
- les moyens de compensation exercent ledit effort de compensation à proximité de chacun des bords libres des porte-moules situés à l'opposé de l'axe de rotation ;
- les moyens de compensation comportent au moins un vérin solidaire du bord libre de l'un des porte-moules et qui est apte à exercer sélectivement ledit effort de compensation sur un organe de serrage relié au bord libre de l'autre des porte-moules ;
- les moyens de compensation comportent au moins deux biellettes dont une première extrémité est solidaire de l'organe de serrage constitué par une barre et dont une deuxième extrémité est montée pivotante autour d'un arbre formant un axe de pivotement qui, parallèle à l'axe de rotation du moule, est situé sur le bord libre de l'autre des porte-moules ;
- la barre pivotante est déplacée sélectivement par des moyens d'actionnement associés entre au moins :
   - une position non-engagée et
   - une position engagée qui est susceptible d'être occupée après fermeture préalable de l'unité et dans laquelle ledit au moins un vérin est apte à exercer sur la barre ledit effort de compensation ;
- ledit au moins un vérin comporte un piston qui est monté coulissant de manière étanche dans un alésage dans lequel le piston délimite une chambre de commande à volume variable ;
- la chambre de commande du vérin est alimentée en fluide sous pression pour provoquer le déplacement du piston d'une position de repos vers une position de travail dans laquelle une face proximale d'appui du piston applique sur la barre située en vis-à-vis ledit effort de compensation ;
- l'effort de compensation exercé par les moyens de compensation pour serrer les porte-moules en position fermée est inférieur à l'effort exercé à l'intérieur de la cavité par le fluide de soufflage sous pression lors du moulage d'un récipient à partir d'une préforme ;
- la barre exerce un effort de traction sur l'autre porte-moule auquel les biellettes la relient lorsque, en position de travail, le piston exerce sur la barre ledit effort de compensation, de l'intérieur vers l'extérieur de l'unité, suivant une direction qui est orthogonale par rapport au plan de joint du moule ;
- les moyens de compensation constituent les moyens de verrouillage de l'unité de moulage ;
- l'unité comporte des moyens de blocage de l'organe de serrage des moyens de compensation pour maintenir ledit organe de serrage au moins dans sa position engagée ;
- le fluide sous pression utilisé avec les moyens de compensation est un fluide hydraulique.

D'autres caractéristiques et avantages de la présente invention apparaîtront à la lecture de la description détaillée qui va suivre pour la compréhension de laquelle on se reportera aux dessins dans lesquels :
- la figure 1 est une vue en perspective qui représente une unité de moulage en position ouverte et qui illustre un mode de réalisation des moyens de compensation selon l'invention ;
- la figure 2 est une vue en perspective qui représente une unité de moulage en position fermée et qui illustre la barre des moyens de compensation dans une position intermédiaire entre la position non-engagée et la position engagée ;
- la figure 3 est une vue en perspective qui représente l'unité de moulage de face en position fermée et qui illustre la barre des moyens de compensation en position engagée ;
- la figure 4 est une vue en coupe qui représente les moyens de compensation de l'unité et qui illustre la barre en position engagée et le piston de chacun des vérins en position de repos ;
- la figure 5 est une vue en coupe analogue à la figure 4 et qui illustre la barre en position engagée et le piston de chacun des vérins en position de travail y appliquant l'effort de compensation ;
- la figure 6 est une vue de trois quarts en perspective qui représente en détail un piston d'un vérin et qui en illustre la face d'appui destinée à coopérer avec la barre pour exercer l'effort de compensation ;
- la figure 7 est une vue en coupe qui représente partiellement celui des porte-moules portant sur son bord libre les vérins des moyens de compensation et qui illustre les moyens d'alimentation en fluide hydraulique de la chambre de commande de chacun des vérins ;
- les figures 8 et 9 sont des vues en perspective qui représentent une variante de réalisation des moyens de blocage de la barre en position engagée.

Dans la suite de la description, on adoptera à titre non limitatif les orientations longitudinale, verticale et transversale en référence au trièdre (L, V, T) représenté sur les figures.

Par convention, les directions longitudinale et transversale sont déterminées de manière fixe par rapport aux porte-moules de sorte que la position ouverte ou fermée occupée est sans incidence sur lesdites orientations.

On utilisera également à titre non limitatif les termes "avant" et "arrière" en référence à l'orientation longitudinale, ainsi que "supérieur" et "inférieur" en référence à l'orientation verticale et enfin "gauche" ou "droite" et "intérieur" ou "extérieur" en référence à l'orientation transversale.

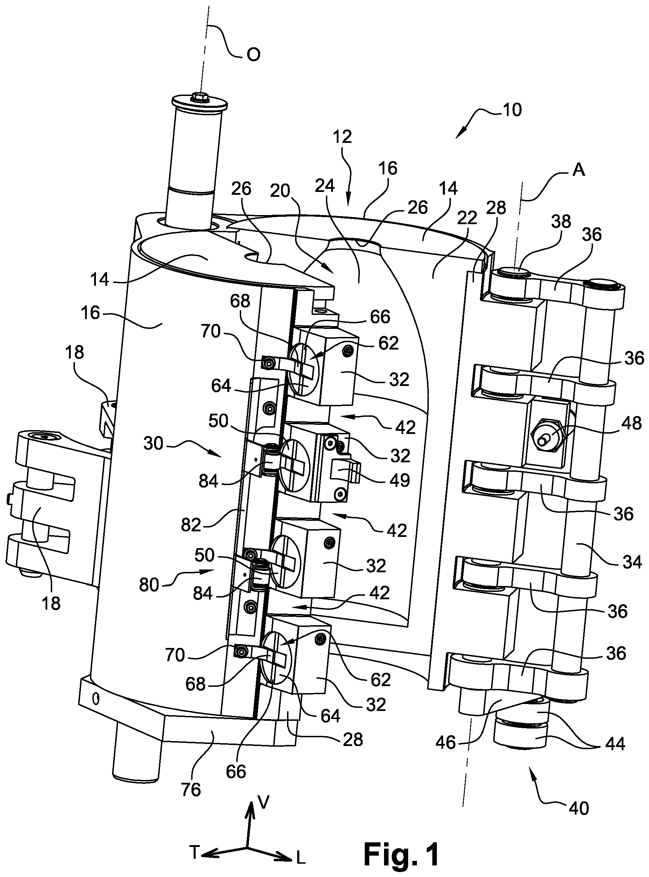

On a représenté aux figures 1 et suivantes, un exemple de réalisation d'une unité 10 de moulage d'au moins un récipient à partir d'une préforme en matière thermoplastique.

L'unité 10 représentée sur la figure 1 est notamment susceptible d'être montée par l'intermédiaire d'une console sur un bâti d'une machine (non représentée) de fabrication de récipients de type rotative et qui est encore appelée "souffleuse".

Une telle unité 10 de moulage constitue alors l'un des postes de moulage par soufflage ou par étirage-soufflage de la machine qui comporte une série de "n" unités de moulage, réparties angulairement de manière régulière autour d'un carrousel de la machine.

L'unité 10 de moulage comporte un moule 12 comportant au moins deux éléments 14 de moulage qui sont montés respectivement dans deux porte-moules 16.

Les deux éléments 14 de moulage sont chacun montés de manière amovible par l'intermédiaire de moyens de fixation (non représentés), tels que des vis, dans l'un des porte-moules 16.

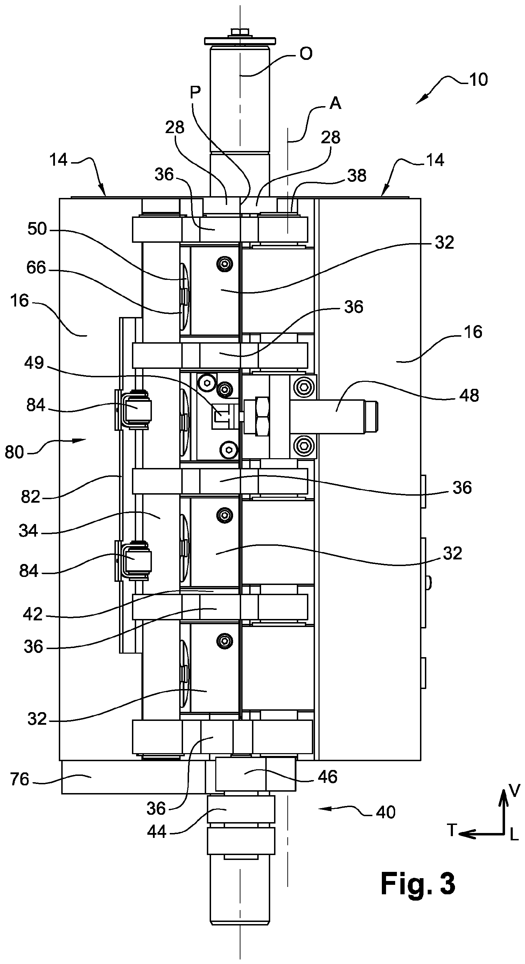

Par convention, le premier élément 14 de moulage est monté dans un premier porte-moule 16 situé sur la droite de la figure 3 et le deuxième élément 14 de moulage dans un deuxième porte-moule 16 situé transversalement à l'opposé, sur la gauche de la figure 3.

L'un au moins des porte-moules 16 est monté mobile en rotation par rapport à l'autre porte-moule autour d'un axe O de rotation.

De préférence, les deux porte-moules 16 sont montés mobiles en rotation autour dudit axe O de rotation. L'axe O de rotation des porte-moules 16 s'étend ici verticalement selon le trièdre (L, V, T).

Les porte-moules 16 sont montés mobiles entre au moins une position ouverte et une position fermée de l'unité 10 de moulage.

La position ouverte (figure 1) de l'unité 10 correspond à une position dans laquelle notamment une préforme chaude est susceptible d'être introduite en vue de sa transformation en un récipient ou encore un récipient fabriqué est susceptible d'être extrait hors du moule 12.

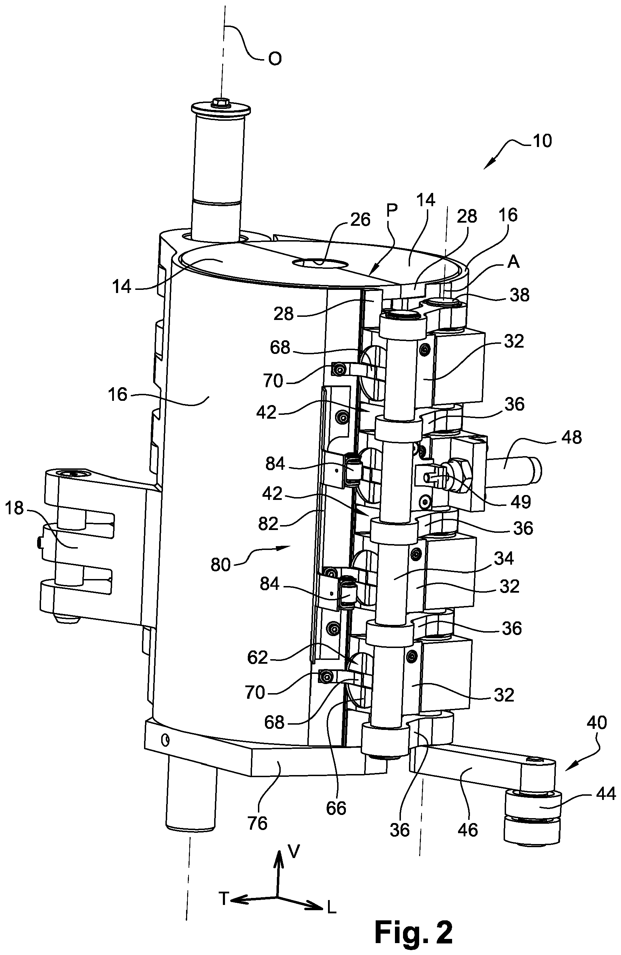

La position fermée (figure 2) de l'unité 10 correspond à une position dans laquelle les éléments 14 de moulage sont réunis suivant un plan P de joint, ledit plan P de joint vertical s'étendant longitudinalement selon le trièdre (L, V, T).

Les porte-moules 16 sont commandés sélectivement en déplacement entre lesdites positions ouverte et fermée par l'intermédiaire d'un dispositif d'ouverture/fermeture de l'unité 10 de moulage (non représenté).

Le dispositif d'ouverture/fermeture de l'unité 10 de moulage comporte des moyens d'articulation et des moyens d'entraînement associés.

Les moyens d'articulation sont agencés, selon la direction longitudinale, en arrière de chaque porte-moule 16. Les moyens d'articulation des porte-moules 16 comportent des oreilles 18 extérieures qui, écartées de l'axe O de rotation, équipent respectivement chaque porte-moule 16.

Les oreilles 18 de chaque porte-moule 16 sont destinées à permettre le montage pivotant de l'une des extrémités de biellettes, par exemple au moins deux biellettes pour chacun des porte-moules 16.

L'autre extrémité de chacune des biellettes est raccordée à libre pivotement sur un axe commun d'articulation qui est agencé longitudinalement en arrière de l'unité 10 de moulage.

La commande de l'ouverture/fermeture de l'unité 10 de moulage est obtenue en déplaçant l'axe commun d'articulation approximativement linéairement selon la direction longitudinale.

En rapprochant l'axe commun de l'axe O de rotation ou au contraire en l'en éloignant, on provoque soit le rapprochement l'un de l'autre des porte-moules 16 et donc la fermeture de l'unité 10 de moulage, soit l'éloignement l'un de l'autre des porte-moules 16 et donc l'ouverture de l'unité 10 de moulage.

Les porte-moules 16 sont susceptibles de s'écarter mutuellement l'un de l'autre en pivotant autour de l'axe O de rotation, entre au moins la position fermée et la position ouverte de l'unité 10 de moulage. C'est en raison de cette cinématique des porte-moules 16 qu'une unité 10 de moulage de ce type est encore appelée "en portefeuille" (ou "*book-like opening"* en anglais).

Pour commander le déplacement de l'axe commun d'articulation auquel sont reliées les biellettes, on utilise des moyens d'entraînement par exemple à came et à galet.

De préférence, les moyens d'entraînement à came et à galet comportent des moyens à levier qui sont interposés entre la came et le galet pour former un amplificateur de course.

L'axe commun d'articulation est par exemple solidaire de l'extrémité d'un bras de commande formant un levier et dont l'autre extrémité libre supporte des moyens suiveurs qui, formés par au moins un galet, sont propres à coopérer avec des moyens de guidage tels qu'une came.

Pour de plus amples détails sur un dispositif d'ouverture/ fermeture d'une unité de moulage, on se reportera par exemple au document FR-A1-2.843.714 qui concerne notamment des moyens de ce type pour commander en ouverture/fermeture une unité de moulage similaire.

En position fermée de l'unité 10, les éléments 14 de moulage délimitent entre eux une cavité 20 de moulage.

Chaque élément 14 de moulage comporte une face 22 verticale d'orientation longitudinale dans laquelle est réalisée en creux une empreinte 24 correspondant pour moitié au récipient à fabriquer. En position fermée de l'unité 10, les faces 22 des éléments 14 de moulage sont jointes sur le pourtour de l'empreinte 24.

En variante, le moule 12 comporte un troisième élément de moulage qui, complémentaire des deux éléments 14 de moulage, est destiné au moulage du fond du récipient.

Le moule 12 comporte une ouverture 26 supérieure de passage d'une préforme (non représentée), ladite ouverture 26 étant réalisée en deux parties semi-circulaires, respectivement dans la face horizontale supérieure de chaque élément 14 de moulage.

Pour la fabrication d'un récipient, une préforme chaude est amenée dans l'unité 10 de moulage simultanément à la commande par le dispositif d'ouverture/fermeture qui déplacent les porte-moules 16 de la position ouverte vers la position fermée de l'unité 10 de moulage.

En vue de son moulage, la préforme chaude est positionnée dans l'unité 10 de moulage de manière que son col s'étende verticalement hors du moule 12 fermé tandis que son corps s'étende verticalement dans la cavité 20.

La préforme chaude est généralement en appui, par l'intermédiaire d'une collerette radiale qu'elle comporte, sur le bord délimitant circonférentiellement l'ouverture 26.

L'unité 10 de moulage comporte des moyens de soufflage ou d'étirage-soufflage (non représentés) pour introduire par son col, à l'intérieur d'une telle préforme, au moins un fluide sous pression, généralement de l'air, en vue de réaliser le moulage ou formage du récipient correspondant dans la cavité 20.

On se reportera par exemple au document FR-2.764.544 pour de plus amples détails sur les moyens de soufflage ou d'étirage-soufflage précités, encore parfois appelés et réalisés sous la forme d'une tuyère de soufflage.

Les porte-moules 16 de l'unité 10 de moulage comportent longitudinalement à l'arrière, du côté de l'axe O de rotation, un bord vertical dont sont solidaires les oreilles 18 reliées aux moyens d'articulation et situé à l'opposé, longitudinalement à l'avant, un bord 28 libre.

En position fermée de l'unité 10 de moulage, les bords 28 libres des porte-moules 16 sont suivant le plan P de joint situés diamétralement à l'opposé de l'axe O de rotation.

Chaque bord 28 libre s'étend verticalement sur toute la hauteur de l'unité 10. Lorsque l'unité 10 de moulage occupe la position fermée, les bords 28 libres avant des porte-moules 16 sont juxtaposés l'un à l'autre et alignés longitudinalement suivant le plan de P de joint avec l'axe O de rotation de l'unité 10 de moulage.

Lorsque l'unité 10 est commandée en déplacement de sa position fermée vers sa position ouverte, les bords 28 libres avant s'écartent alors l'un de l'autre, transversalement vers l'extérieur et en sens opposé, l'un vers la droite l'autre vers la gauche.

Dans l'état de la technique, l'unité 10 de moulage comporte des moyens 30 de compensation formés par au moins une chambre de compensation qui est commandée pour exercer au moyen d'un fluide sous pression un effort, dit de compensation, tendant à serrer l'un contre l'autre les éléments 14 de moulage au niveau du plan P de joint.

Après la mise en pression, une telle chambre de compensation formant les moyens 30 de compensation s'oppose aux efforts que le fluide de soufflage, formé par de l'air sous pression, exerce sur les éléments 14 de moulage lors du formage du récipient à partir de la préforme chaude.

Selon l'invention, les moyens 30 de compensation agissent sur les porte-moules 16 pour les serrer l'un contre l'autre en position fermée de l'unité 10 de moulage et exercer ledit effort de compensation.

Avantageusement, ledit effort de compensation est exercé sur les porte-moules 16 et non plus sur l'un seulement des éléments 14 de moulage comme dans l'état de la technique.

Avantageusement, les moyens 30 de compensation sont portés par les porte-moules 16 et par conséquent rendus indépendants des éléments 14 de moulage.

Les moyens 30 de compensation sont agencés au voisinage desdits bords 28 libres des porte-moules 16 sur lesquels est appliqué ledit effort de compensation.

Les moyens 30 de compensation exercent ledit effort de compensation à proximité de chacun des bords 28 libres des porte-moules 16 situés, diamétralement ici longitudinalement, à l'opposé de l'axe O de rotation.

Avantageusement, l'effort de compensation est appliqué avec un effet de levier correspondant, par rapport à l'axe O de rotation de l'unité 10 de moulage, à la longueur des porte-moules 16 selon la direction longitudinale.

Grâce à l'amplification résultant d'un tel bras de levier, l'effort de compensation pour serrer les porte-moules 16 en position fermée est avantageusement inférieur à l'effort exercé à l'intérieur de la cavité par l'air sous pression lors du soufflage de la préforme pour obtenir le récipient.

On décrira ci-après un mode de réalisation de l'invention donné toutefois à titre d'exemple non limitatif.

Les moyens 30 de compensation comportent au moins un vérin 32 qui est solidaire du bord 28 libre de l'un des porte-moules, ici le deuxième porte-moule 16 à gauche sur la figure 1.

De préférence, les moyens 30 de compensation comportent ici quatre vérins 32 qui sont alignés verticalement et répartis sur ledit bord 28 libre avant du deuxième porte-moule 16.

Chaque vérin 32 est apte à exercer sélectivement ledit effort de compensation sur un organe 34 de serrage qui est relié au bord 28 libre avant de l'autre des porte-moules 16, ici le premier porte-moule 16 à droite sur la figure 1.

En variante, l'organe 34 de serrage est porté par le deuxième porte-moule 16 et ledit au moins un vérin 32 porté par le premier porte-moule 16.

Les moyens 30 de compensation comportent au moins deux biellettes 36 dont une première extrémité est solidaire de l'organe de serrage constitué par une barre 34 d'orientation verticale et dont une deuxième extrémité est montée pivotante autour d'un arbre 38.

L'arbre 38 forme un axe A de pivotement de la barre 34 qui est parallèle à l'axe O de rotation du moule et qui est situé sur le bord 28 libre avant de l'autre des porte-moules, soit le premier porte-moule 16.

De préférence, la barre 34 verticale est montée pivotante autour de l'axe A par l'intermédiaire de cinq biellettes 36 qui déterminent entre elles quatre tronçons sur chacun desquels les quatre vérins 32 vont appliquer sélectivement ledit effort de compensation.

La barre 34 est commandée sélectivement en déplacement par des moyens 40 d'actionnement associés.

La barre 34 pivotante est montée mobile entre au moins une position non-engagée représentée sur les figures 1 et 2, et une position engagée représentée sur la figure 3.

La position non-engagée correspond à une position dans laquelle la barre 34 n'interfère pas avec les porte-moules 16 qui sont libres d'être déplacés entre les positions ouverte et fermée de l'unité 10.

Tel que représenté sur la figure 1, la barre 34 occupe notamment la position non engagée lorsque l'unité 10 de moulage est en position ouverte (ou est entrouverte).

La position non-engagée de la barre 34 correspond par exemple à une position dans laquelle les biellettes 36 s'étendent longitudinalement, parallèlement au plan P de joint déterminé par les faces 22 accolées des éléments 14 de moulage.

La position engagée de la barre 34 correspond à une position qui est susceptible d'être occupée après fermeture préalable du moule 12 et dans laquelle ledit au moins un vérin 32 est apte à exercer sur la barre 34 ledit effort de compensation.

L'angle de rotation parcouru par la barre 34 entre la position non-engagée et la position engagée présente ici une valeur de 90°, les biellettes 36 passant d'une orientation longitudinale à une orientation transversale.

De préférence, les deux vérins 32 agencés verticalement au milieu du bord 28 déterminent entre eux et avec chacun des vérins 32 supérieur et inférieur adjacents, un logement 42 pour le passage du corps de chaque biellette 36 lorsque la barre 34 est déplacée vers sa position engagée, puis l'occupe.

En position engagée, la barre 34 est positionnée transversalement en vis-à-vis des vérins 32, les biellettes 36 reliant la barre 34 à son axe A de pivotement s'étendent dans un plan transversal qui est orthogonal au plan P de joint d'orientation longitudinale tel que déterminé par les éléments 14 de moulage en position fermée de l'unité 10.

De préférence, les moyens 40 d'actionnement associés à la barre 34 pour en commander le déplacement entre les positions non-engagée et engagée sont du type à galet et à came.

Les moyens 40 d'actionnement comportent par exemple au moins un galet 44 monté à l'extrémité libre d'un levier 46 dont l'autre extrémité est liée en déplacement à l'extrémité inférieure de l'arbre 38 vertical formant l'axe A de pivotement de la barre 34.

Lorsque le galet 44 parcourt un chemin d'une came (non représentée), l'arbre 38 est entraîné en rotation par l'intermédiaire du levier 46. Les biellettes 36 et la barre 34 pivotent alors autour de l'axe A, respectivement entre la position non-engagée et la position engagée représentées sur les figures 1 et 3 et réciproquement.

De préférence, l'unité 10 de moulage comporte des moyens 48 d'amortissement qui interviennent en fin de course lors de la fermeture des porte-moules 16 commandée par l'intermédiaire du dispositif d'ouverture/fermeture associé.

Les moyens 48 d'amortissement sont portés par l'un des porte-moules 16 et destinés à coopérer avec une butée 49 complémentaire qui est portée par l'autre des porte-moules 16.

De tels moyens 48 d'amortissement sont connus et ne seront donc pas décrits plus en détails.

Chaque vérin 32 comporte un piston 50 qui est monté coulissant dans un alésage 52 dans lequel le piston 50 délimite une chambre 54 de commande à volume variable.

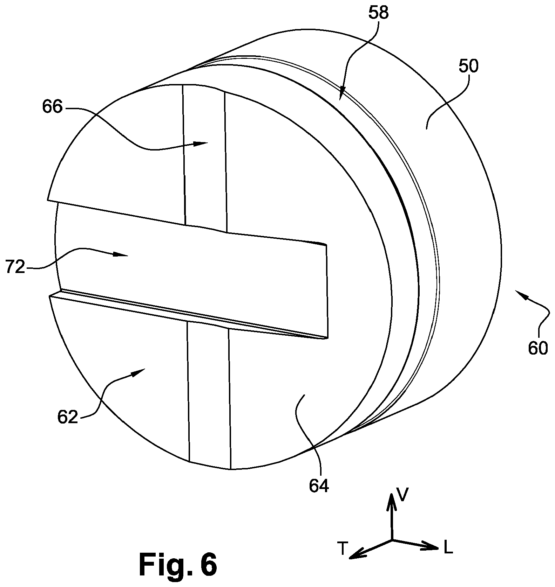

Le piston 50 est plus particulièrement illustré à la figure 6.

Le piston 50 comporte des moyens 56 d'étanchéité, tels qu'un joint torique ou à lèvre(s), qui sont par exemple logés dans une gorge 58 annulaire du piston 50 et aptes à coopérer avec la paroi cylindrique de l'alésage 52.

En variante non représentée, le piston 50 comporte des moyens de guidage, tels qu'une bague qui est montée dans une gorge annulaire du piston 50.

Le piston 50 comporte une face 60 distale qui délimite la chambre 54 de commande à volume variable et, transversalement à l'opposé, une face 62 proximale destinée à coopérer avec la barre 34 des moyens 30 de compensation.

Avantageusement, la face 62 proximale du piston 50 comporte une partie 64 longitudinale avant qui est chanfreinée de manière à faciliter le passage de la barre 34 lorsque ladite barre 34 est déplacée de sa position non-engagée vers sa position engagée.

La face 62 proximale du piston 50 comporte une surface 66 d'appui qui est conformée pour coopérer avec la surface cylindrique externe de la barre 34.

Tel qu'illustré sur la figure 6, la surface 66 d'appui ménagée dans la face 62 proximale du piston 50 présente une forme concave et s'étend verticalement de manière rectiligne au centre de la face 62 du piston.

En fonction de la pression établie dans la chambre 54 de commande au moyen du fluide sous pression, le piston 50 coulisse dans l'alésage 52 du vérin 32 entre au moins une position de repos et une position de travail.

Grâce à la partie 64 chanfreinée, la barre 34 est susceptible de venir au plus prêt de la face 62 proximale en position engagée et la course entre la position de repos et la position de travail du piston 50 pour appliquer l'effort de compensation est avantageusement courte car ladite course en est réduite d'autant.

De préférence, le vérin 32 est un vérin de type simple effet et comporte des moyens 68 de rappel aptes à rappeler automatiquement le piston 50 vers sa position de repos.

En variante, le vérin 32 est un vérin double effet et les moyens de rappel du piston 50 sont supprimés.

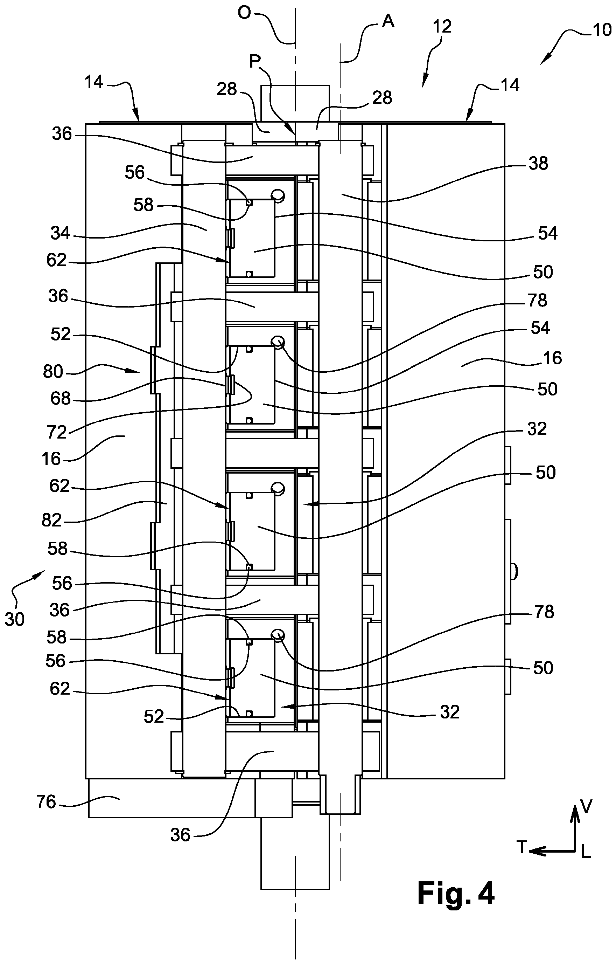

Les moyens 68 de rappel sont par exemple constitués par une lame élastique qui, agencée à l'extérieur du vérin 32, sollicite le piston 50 vers sa position de repos représentée sur la figure 4.

La lame 68 élastique présente globalement une forme en "L" comportant une partie transversale et une partie longitudinale.

La partie transversale de la lame 68 est fixée au porte-moule 16 par l'intermédiaire de moyens 70 de fixation, tels que des vis.

La partie longitudinale de la lame 68 est reçue dans une encoche 72 complémentaire ménagée dans la face 62 proximale du piston 50 qu'elle sollicite vers sa position de repos.

Grâce à l'encoche 72, la partie longitudinale de la lame 68 ne fait pas saillie et n'interfère pas avec la surface 66 d'appui destinée à exercer sur la barre 34 ledit effort de compensation.

En variante, les moyens 68 de rappel du piston 50 sont intégrés à l'intérieur du vérin 32 et par exemple réalisés sous la forme d'un ressort à spirales dont une extrémité est en appui fixe et dont l'autre extrémité sollicite le piston 50.

L'agencement des moyens 68 de rappel, tels que la lame, à l'extérieur du vérin 32 permet avantageusement d'obtenir un vérin 32 qui présente un encombrement réduit selon la direction transversale et ce faisant de limiter également la dimension des biellettes 36 associées à la barre 34.

La compacité des vérins 32 facilite d'autant leur implantation sur le bord 28 libre avant du porte-moule 16.

La chambre 54 de commande de chaque vérin 32 est alimentée en fluide sous pression pour provoquer, à l'encontre des moyens 68 de rappel du piston, le déplacement du piston 50 de la position de repos vers la position de travail.

De préférence, l'unité 10 comporte des moyens de mise en pression du fluide (non représentés), tels qu'au moins une pompe avantageusement associée à une électrovanne, pour alimenter sélectivement en fluide la chambre 54 de commande de chaque vérin 32.

La position de repos du piston 50 illustrée sur la figure 4 correspond à une position dans laquelle la barre 34 est libre d'être positionnée dans sa position engagée.

La position de travail du piston 50 illustrée sur la figure 5 correspond à une position dans laquelle une face 62 proximale du piston 50 applique, par l'intermédiaire de la surface 66 d'appui, sur une partie de la barre 34 située en vis-à-vis ledit effort de compensation.

La barre 34 montée pivotante sur l'arbre 38 par l'intermédiaire des biellettes 36 constitue un moyen de renvoi d'effort.

En effet, la poussée correspondant à l'effort de compensation appliqué sur la barre 34 par chaque piston 50 des vérins 32 solidaires du deuxième porte-moule 16 s'accompagne d'un effort de traction équivalent exercé sur le premier porte-moule 16 par l'intermédiaire de l'arbre 38.

La barre 34 exerce un effort de traction sur le premier porte-moule 16 auquel les biellettes 36 la relient lorsque, en position de travail, chaque piston 50 exerce sur la barre 34 ledit effort de compensation suivant une direction transversale, orthogonalement au plan P de joint, et selon un sens orienté de la droite vers la gauche, soit vers l'extérieur de l'unité 10 de moulage.

Ainsi, l'effort de compensation exercé tend à serrer l'un contre l'autre les deux porte-moules 16 au niveau du plan P de joint et ce faisant à au moins réduire voire supprimer tout jeu entre les éléments 14 de moulage et à en maintenir les faces 22 accolées l'une contre l'autre.

L'effort de compensation est appliqué sur les bords 28 libres des porte-moules situés diamétralement à l'opposé de l'axe O de rotation des porte-moules 16 de l'unité 10 de moulage.

L'effort de compensation appliqué par les moyens 30 de compensation s'exerce avec un effet de levier par rapport à l'axe O de rotation, le bras de levier correspondant longitudinalement à chacun des porte-moules 16.

Par comparaison avec l'effort de compensation obtenu auparavant avec une chambre de compensation, on obtient ainsi une compensation équivalente en appliquant un effort de compensation sur les bords libres des porte-moules qui est avantageusement inférieur du fait de l'effet amplification correspondant au bras de levier.

Pour un même effort de compensation, les moyens 30 de compensation selon l'invention offrent en utilisation un meilleur rendement énergétique que ceux d'une chambre de compensation selon l'état de la technique.

Avantageusement, l'effort de compensation exercé par les moyens 30 de compensation pour serrer les porte-moules 16 en position fermée est inférieur à l'effort exercé à l'intérieur de la cavité 20 par le fluide de soufflage sous pression lors du soufflage de la préforme pour obtenir le récipient.

Par comparaison, l'effort de compensation appliqué sur l'élément 14 de moulage au moyen d'une chambre de compensation doit être lui nécessairement supérieur à l'effort exercé à l'intérieur de la cavité 20 par le fluide de soufflage sous pression lors du soufflage.

De préférence, le fluide sous pression alimentant la chambre 54 de commande de chaque vérin 32 est un fluide incompressible. Le fluide de compensation est avantageusement un fluide hydraulique.

Avantageusement, le fluide sous pression utilisé pour obtenir l'effort de compensation est un fluide hydraulique, tel que de l'huile.

De préférence, le fluide hydraulique sous pression est amené dans la chambre 54 de commande de chacun des vérins 32 par un canal 74 d'alimentation commun, grâce à quoi chaque piston 50 exerce un même effort de compensation sur la barre 34.

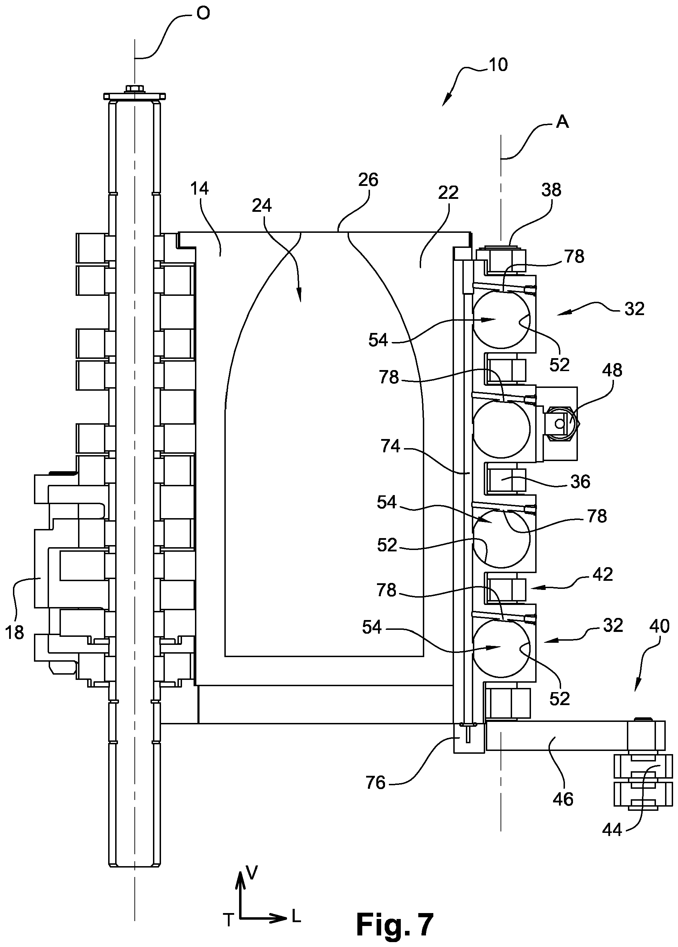

Tel qu'illustré par la figure 7, l'alimentation se fait à travers une embase 76 jusqu'au canal 74 d'alimentation des vérins 32 qui s'étend verticalement dans le bord 28 libre avant du deuxième porte-moule 16.

De préférence, l'unité 10 de moulage comporte un canal 78 secondaire pour chaque vérin 32, ledit canal 78 se raccordant au canal 74 et communiquant avec la chambre 54 de commande à volume variable.

Chaque canal 78 secondaire s'étend longitudinalement dans le bord 28, entre le canal 74 et la chambre 54 de commande, avec une inclinaison déterminée afin d'évacuer tout air présent dans la chambre 54 dans une partie supérieure de laquelle l'extrémité inférieure dudit canal 78 débouche.

Avantageusement, les canaux 78 permettent de garantir le bon fonctionnement des vérins 32 d'application de l'effort de compensation.

L'extrémité supérieure du canal 74 comporte par exemple un bouchon pour réaliser une purge et évacuer l'air du circuit en vue de l'alimentation en fluide sous pression des vérins 32.

Dans l'état de la technique, une unité 10 de moulage comporte encore un dispositif de verrouillage de l'unité comportant des moyens de verrouillage des porte-moules 16 susceptibles d'occuper une position verrouillée et une position déverrouillée.

La position verrouillée correspond à une position dans laquelle les porte-moules 16 de l'unité 10 de moulage sont maintenus dans ladite position fermée, et la position déverrouillée à une position dans laquelle les porte-moules 16 de l'unité 10 de moulage sont mobiles par rapport à l'autre.

Avantageusement, les moyens 30 de compensation constituent les moyens de verrouillage de l'unité 10 de moulage
En effet, l'effort de compensation étant exercé par les moyens 30 sur les porte-moules 16 en tendant à les serrer l'un contre et l'autre en position fermée de l'unité 10 de moulage assure également un verrouillage de l'unité 10 de moulage en position fermée, en particulier lors du moulage du récipient.

La position de travail des moyens 30 de compensation correspond à la position verrouillée des moyens de verrouillage tandis que la position de repos correspond à la position déverrouillée.

Lorsque les moyens 30 de compensation remplacent les moyens de verrouillage, les moyens 30 de compensation sont commandés chaque fois que l'unité 10 de moulage est en position fermée pour en assurer systématiquement le verrouillage.

Cependant, il arrive qu'une unité 10 de moulage ne soit pas utilisée pour fabriquer un récipient, par exemple lorsque pour des raisons particulières (cadences, etc.) une unité 10 sur deux d'une machine est utilisée.

L'unité 10 de moulage non utilisée est alors néanmoins fermée automatiquement par le dispositif d'ouverture/fermeture associé.

Les moyens 30 de compensation de l'unité 10 sont commandés pour assurer systématiquement le verrouillage et cela indépendamment du fait qu'un moulage de récipient soit ou non réalisé par l'unité 10 de moulage.

Or, il est avantageux de ne faire fonctionner les moyens 30 de compensation pour réaliser un verrouillage que lorsque le moulage d'un récipient doit effectivement intervenir.

Un effort de verrouillage pour maintenir l'unité 10 de moulage en position fermée est principalement requis lorsque le moulage par soufflage d'un récipient est effectué.

En l'absence de soufflage, le verrouillage permet outre le maintien de l'unité 10 de moulage en position fermée, d'immobiliser certains éléments dans une position déterminée.

A défaut d'un tel maintien, lorsqu'une machine rotative (souffleuse) équipée d'une unité 10 de moulage est entraînée en rotation, la force centrifuge s'appliquant provoquerait alors des déplacements aléatoires de ces éléments.

A titre d'exemple desdits éléments de l'unité 10 dont le positionnement est susceptible d'être affecté par la force centrifuge, on citera par exemple un galet du dispositif d'ouverture/fermeture de l'unité 10 ou encore le galet 44 des moyens 40 d'actionnement des moyens 30 de compensation qui l'un comme l'autre ne coopèrent pas en permanence avec une came complémentaire lorsque l'unité 10 de moulage effectue un tour complet sur une machine rotative.

Dans le mode de réalisation des figures 1 à 7, la force centrifuge générée par l'entraînement en rotation d'une machine comportant l'unité 10 de moulage tend à provoquer le désengagement de la barre 34 des moyens 30 de compensation.

C'est la raison pour laquelle, l'unité 10 de moulage comporte avantageusement des moyens 80 de blocage de la barre 34 des moyens 30 de compensation.

Avantageusement, les moyens 80 de blocage interviennent pour maintenir systématiquement la barre 34 en position engagée et tout particulièrement lorsque, en l'absence de fabrication par moulage d'un récipient par l'unité 10, les moyens 30 de compensation ne sont pas actifs.

En bloquant la barre 34 en position engagée, les moyens 80 de blocage assurent également le maintien en position fermée de l'unité 10 de moulage et évitent toute ouverture qui ne soit pas volontairement commandée par l'intermédiaire des moyens 40 d'actionnement.

Grâce aux moyens 80 de blocage, les moyens 30 de compensation sont susceptibles d'être commandés sélectivement, en particulier d'être commandés uniquement lors de la fabrication d'un récipient par l'unité 10 de moulage.

Avantageusement, les moyens 80 de blocage sont aptes à bloquer la barre 34 en position engagée sans nécessairement exercer de manière permanente un effort de blocage.

De préférence, les moyens 80 de blocage empêchent la barre 34 de quitter la position engagée et plus précisément de se désengager en pivotant autour de l'axe A sous l'action de la force centrifuge.

Grâce à des moyens 80 de blocage, il est possible de maintenir l'unité 10 fermée, indépendamment de la mise en oeuvre des moyens 30 de compensation constituant les moyens de verrouillage et ce faisant d'optimiser la consommation d'énergie associée au fonctionnement desdits moyens 30 de compensation.

Les moyens 80 de bocage sont avantageusement simplifiés par comparaison avec des moyens de verrouillage conventionnels dès lors qu'ils sont destinés à maintenir la barre 34 en position engagée et assurent simultanément un pré-verrouillage de l'unité 10 de moulage en position fermée.

Un tel pré-verrouillage est suffisant mais uniquement en l'absence de soufflage de la préforme au moyen d'air sous pression pour former le récipient.

De préférence, l'alimentation en fluide sous pression des vérins 32 est réalisée seulement lorsque l'unité 10 de moulage est utilisée pour le moulage d'un récipient et ce faisant doit être maintenue en position fermée à l'encontre des efforts exercés lors du soufflage par l'air sous pression sur la surface de la cavité 20 de moulage.

Les vérins 32 des moyens 30 de compensation formant les moyens de verrouillage sont avantageusement susceptibles d'être alimentés sélectivement en fluide hydraulique sous pression.

Les moyens 80 de blocage sont formés par au moins un organe déformable élastiquement et un organe de commande associé qui apte à en provoquer sélectivement la déformation afin de maintenir la barre 34 au moins dans sa position engagée.

Dans le mode de réalisation représenté sur les figures, les moyens 80 de blocage comportent une plaque 82 déformable élastiquement sur laquelle sont rapportés à fixation deux rouleaux 84.

Lorsque la barre 34 est déplacée par les moyens 40 d'actionnement de sa position non engagée vers sa position engagée, la barre 34 entre en contact avec les rouleaux 84 et provoque la déformation élastique de la plaque 82 pour pouvoir atteindre la position engagée.

De préférence, les rouleaux 84 sont en contact avec la barre 34 afin d'en assurer le blocage et le positionnement par rapport aux pistons 50 des vérins 32.

La barre 34 n'est susceptible de quitter la position engagée, en effectuant le parcours en sens inverse, que si et seulement si la barre 34 exerce sur les rouleaux 84 un effort supérieur à celui opposé par la plaque 82.

Avantageusement, seuls les moyens 40 d'actionnement sont aptes à manoeuvrer la barre 34 et à vaincre ledit effort de blocage exercé par la plaque 82 en déformant à nouveau élastiquement la plaque 82 pour désengager la barre 34 et en autoriser le déplacement de sa position engagée vers sa position non-engagée.

L'effort de blocage exercé par les moyens 80 de blocage est avantageusement supérieur à celui que la force centrifuge peut exercer sur la barre 34 et cela afin de garantir le maintien en position engagée de la barre 34.

Tel qu'expliqué précédemment, les moyens 80 de blocage assurent également celui de l'unité 10 de moulage en position fermée lorsque la machine comportant ladite unité 10 est entraînée en rotation mais sans pour autant que l'unité 10 soit utilisée pour la fabrication d'un récipient.

On décrira ci-après le fonctionnement d'un cycle de compensation dans une unité 10 de moulage comportant des moyens 30 de compensation selon le mode de réalisation qui vient d'être décrit en référence aux figures 1 à 7.

Dans une première étape, l'unité 10 de moulage occupant initialement sa position ouverte, on commande le dispositif d'ouverture/fermeture associé à l'unité 10 de moulage pour procéder à la fermeture de l'unité.

Le dispositif d'ouverture/fermeture agit sur les porte-moules 16 qui pivotent autour de l'axe O de rotation, depuis la position ouverte représentée à la figure 1 jusqu'à atteindre la position fermée représentée sur la figure 2.

En position fermée de l'unité 10, les faces 22 des éléments 14 de moulage sont réunies suivant le plan P de joint du moule.

Si la fabrication d'un récipient doit être réalisée, une préforme chaude est alors introduite par des moyens de transfert (non représentés), tels qu'une pince, dans l'unité 10 de moulage, généralement parallèlement à la fermeture et avant que la position fermée ne soit complètement atteinte.

Dans une deuxième étape, les moyens 40 d'actionnement sont commandés pour déplacer la barre 34 des moyens 30 de compensation depuis sa position non-engagée vers sa position engagée.

Le levier 46 est entraîné par le galet 44 qui coopère avec une came (non représentée) et entraîne en rotation dans sa course l'arbre 38 qui est solidaire en rotation de la barre 34 par l'intermédiaire des biellettes 36.

La barre 34 est entraînée en rotation autour de l'axe A de pivotement, quittant la position non-engagée occupée jusqu'alors pour pivoter vers la position engagée.

L'unité 10 de moulage occupant sa position fermée, la barre 34 est amenée en position engagée sans interférence notamment avec les vérins 32, les trois biellettes 36 non reliées aux extrémités de la barre 34 s'engagent horizontalement dans les logements 42 entre deux vérins 32 consécutifs.

Avantageusement, la manœuvre de la barre 34 par les moyens 40 d'actionnement peut débuter avant que ne soit totalement achevée celle de fermeture de l'unité 10 de moulage et réalisée parallèlement, en temps masqué, de manière à réduire les temps de manoeuvre et incidemment le temps total nécessaire à la fabrication d'un récipient à partir d'une préforme.

Dans une troisième étape de fin de course, la barre 34 est engagée en force par les moyens 40 d'actionnement à l'encontre des moyens 80 de blocage équipant de préférence l'unité 10 de moulage et portés par le deuxième porte-moule 16.

De préférence, les moyens 80 de blocage sont aptes à maintenir la barre 34 en position engagée et ce faisant l'unité 10 en position fermée.

Avantageusement, les moyens 80 de blocage permettent en particulier de ne mettre en pression le fluide hydraulique pour n'alimenter les vérins 32 des moyens 30 de compensation qu'en cas de fabrication de récipient et non pas systématiquement pour verrouiller l'unité 10 de moulage.

En l'absence de fabrication d'un récipient, les moyens 80 de blocage de la barre 34 assurent avantageusement un pré-verrouillage suffisant pour maintenir l'unité 10 de moulage en position fermée.

En rentrant au contact avec les rouleaux 84 des moyens 80 de blocage, la barre 34 provoque la déformation élastique de la plaque 82 pour venir se placer en position engagée telle que représentée sur la figure 3, soit transversalement en vis-à-vis des pistons 50 des vérins 32 des moyens 30 de compensation.

Avantageusement, la barre 34 n'entre pas en contact avec la face 62 proximale des pistons 50 lors de son engagement grâce notamment à la partie 64 chanfreinée que comporte chacun d'eux le jeu entre la barre 34 et la face 62 est réduit.

Le piston 50 de chacun des vérins 32 occupe alors sa position de repos telle que représentée sur la figure 4 et dans laquelle aucun des pistons 50 n'est en contact avec la barre 34 sur laquelle aucun effort n'est par conséquent exercé.

Dans une quatrième étape, on commande des moyens d'alimentation en fluide sous pression pour alimenter les vérins 32, le fluide de compensation sous pression étant de préférence un fluide hydraulique.

Le fluide hydraulique sous pression est amené à travers une embase 76 de l'unité 10 de moulage et distribuée par le canal 74 ménagé dans le bord 28 libre pour alimenter chacune des chambres 54 de commande à volume variable.

Pour chaque vérin 32, l'introduction du fluide sous pression dans la chambre 54 va provoquer le coulissement du piston 50 dans l'alésage 52 sous l'effet de la pression s'exerçant sur sa face 60 distale.

Chaque piston 50 se déplace de sa position de repos vers sa position de travail dans laquelle le piston 50 est en contact avec la barre 34 et exerce sur une partie de la barre 34 ledit effort de compensation par l'intermédiaire de la surface 66 d'appui complémentaire que comporte sa face 62 proximale.

Avantageusement, la surface 66 d'appui du piston 50 de forme concave présente un rayon de courbure déterminé en fonction de la barre 34 pour obtenir une application de l'effort de compensation sur la plus grande surface possible et non pas limité suivant un point ou une ligne de contact.

Grâce à l'utilisation des quatre vérins 32, l'application de l'effort de compensation est répartie verticalement de manière égale sur la hauteur de la barre 34 et donc sur les bords 28 libres avant des porte-moules 16 de l'unité 10 de moulage.

L'effort de compensation appliqué par les moyens 30 de compensation a pour effet de serrer l'un contre l'autre les deux porte-moules 16 de l'unité 10 afin au moins de réduire le jeu entre les éléments 14 de moulage au niveau du plan P de joint.

Grâce à l'absence ou la réduction d'un tel jeu, une unité 10 de moulage comportant des moyens 30 de compensation selon l'invention permet d'obtenir un récipient fabriqué de qualité.

Le moulage du récipient est réalisé par soufflage ou par étirage-soufflage, notamment avec de l'air sous pression formant le fluide de soufflage qui est introduit par les moyens de soufflage à l'intérieur de la préforme chaude.

Les moyens 30 de compensation sont aptes à s'opposer aux efforts que le fluide sous pression exerce sur les éléments 14 de moulage délimitant en creux la cavité 20 et ce faisant assurent une fonction de verrouillage en maintenant l'unité 10 de moulage en position fermée.

Avantageusement, les moyens 30 de compensation permettent de simplifier l'unité 10 de moulage en supprimant la chambre de compensation utilisée jusqu'alors et associée à l'un des éléments 14 de moulage.

Les moyens 30 de compensation forment avantageusement les moyens de verrouillage de l'unité 10 de moulage de sorte que lesdits moyens 30 de compensation assurent une double fonction de compensation d'une part et de verrouillage d'autre part.

Avantageusement, les moyens 80 de blocage permettent une utilisation sélective des moyens 30 de compensation au bénéfice d'une consommation d'énergie optimale, le fluide hydraulique sous pression n'étant délivré aux vérins 32 que lorsqu'un récipient est fabriqué par l'unité 10 de moulage.

Le récipient fabriqué doit ensuite être extrait hors de l'unité 10 de moulage et on procède pour ce faire aux étapes inverses.

Dans une cinquième étape, les vérins 32 cessent d'être alimentés en fluide hydraulique sous pression, la pression dans chaque chambre 54 de commande va décroître jusqu'à devenir inférieure à l'effort de rappel exercé sur le piston 50 par les moyens 68 de rappel et le piston 50 est automatiquement rappelé vers sa position de repos.

Dans une sixième étape, la barre 34 est alors libre d'être à nouveau manœuvrée par l'intermédiaire des moyens 40 d'actionnement associés qui l'entraînent en rotation autour de l'axe A de pivotement depuis sa position engagée vers sa position non-engagée.

Lors de cette manoeuvre de dégagement, la barre 34 coopère à nouveau avec les rouleaux 84 et provoque la déformation élastique de la plaque 82.

Dans une septième étape, le dispositif d'ouverture/ fermeture est commandé pour agir sur les porte-moules 16 et ouvrir l'unité 10 de moulage afin d'en extraire le récipient fabriqué.

Avantageusement, la manoeuvre d'ouverture de l'unité 10 de moulage peut débuter avant que la barre 34 n'ait complètement atteinte la position non-engagée.

De préférence, l'ouverture de l'unité 10 de moulage débute alors que la barre 34 a parcourue un angle d'environ 30° sur l'angle total de 90° qui existe entre la position engagée et la position non-engagée.

Une fois le récipient fabriqué extrait, un nouveau cycle de fabrication peut alors débuter en introduisant une nouvelle préforme.

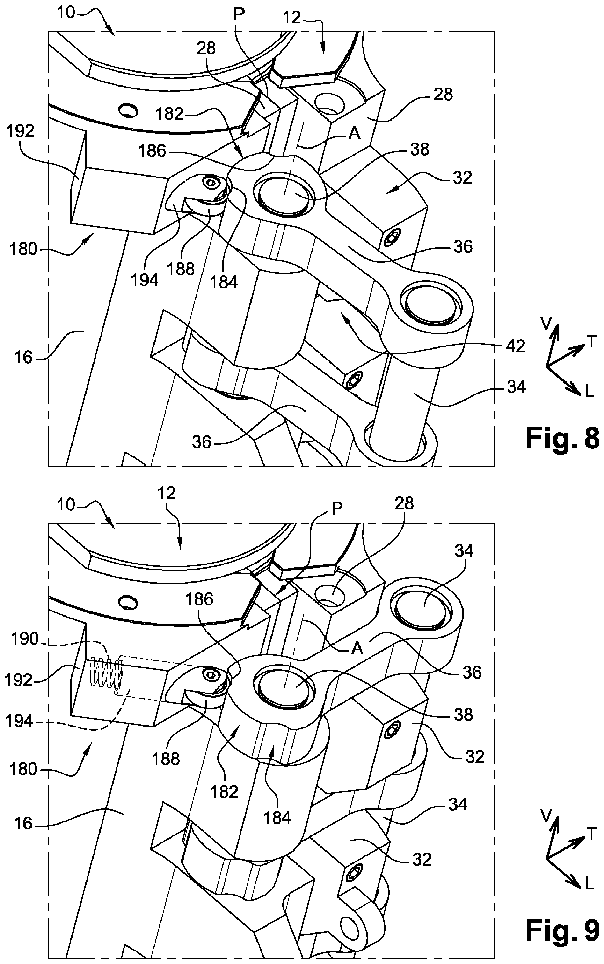

On a représenté aux figures 8 et 9, un autre exemple de réalisation des moyens de blocage, ci-après référencés 180.

Par comparaison avec les moyens 80 de blocage décrits précédemment, les moyens 180 de blocage selon cet exemple de réalisation agissent sur l'arbre 38 et non sur la barre 34 pour assurer au moins le maintien de la barre 34 en position engagée.

Comme précédemment, les moyens 180 de blocage permettent d'utiliser sélectivement les moyens 30 de compensation en maintenant l'unité 10 de moulage en position fermée lorsque lesdits moyens 30 de compensation n'en assurent pas le verrouillage et ne sont pas actifs, pas alimentés en fluide sous pression en l'absence de fabrication de récipient par l'unité 10.

Avantageusement, les moyens 180 de blocage sont aptes à bloquer la barre 34 des moyens 30 de compensation en position non-engagée et en position engagée.

L'une au moins des biellettes 36 comporte, à celle de ses extrémités qui est reliée à l'arbre 38 formant l'axe A de pivotement de la barre 34, au moins un cran ménagé dans la surface 182 verticale externe de la biellette 36.

De préférence, ladite au moins une biellette 36 comporte un premier cran 184 pour bloquer la barre 34 en position non-engagée (figure 8) et un deuxième cran 186 pour bloquer la barre 34 en position engagée (figure 9).

Les moyens 180 de blocage comportent au moins un galet 188 qui est monté mobile en translation à l'encontre d'un organe 190 élastique, ledit organe 190 élastique sollicitant le galet 188 en appui contre la surface 182 verticale externe et ce faisant dans l'un ou l'autre des crans 184, 186 dans lequel le galet 188 pénètre alors.

L'organe 190 élastique est par exemple formé par un ressort à spirales dont une extrémité est en appui contre une face 192 d'un boîtier des moyens 180 de blocage et dont l'autre extrémité sollicite une tige 194 à l'extrémité de laquelle est montée ledit galet 188.

Sur la figure 8, on a représenté en transparence le ressort 190 et la tige 194 des moyens 180 de blocage à travers le boîtier.

Les moyens 180 de blocage sont solidaires de celui des porte-moules 16 dont le bord 28 porte l'arbre 38 des moyens 30 de compensation.

Les moyens 180 de blocage sont associés à l'une au moins des biellettes 36 telle que la biellette agencée à l'extrémité supérieure de l'arbre 38 d'orientation verticale, en variante de chacune des biellettes 36 agencées respectivement aux extrémités de l'arbre 38.

Tel que représenté sur la figure 8, le galet 188 est engagé dans le premier cran 184 de la biellette 36 et bloque en position non-engagée la barre 34 des moyens 30 de compensation qui est solidaire de l'autre extrémité de la biellette 36.

Lorsque les moyens 40 d'actionnement entraînent en rotation l'arbre 38 pour déplacer la barre 34 de la position non-engagée vers la position engagée tel que décrit précédemment, l'effort exercé par les moyens 40 d'actionnement l'emporte sur celui des moyens 180 de blocage, en comprimant notamment le ressort 190.

Le galet 188 sort alors du premier cran 184 lorsque la barre 34 quitte la position non-engagée pour parcourir la surface 182 jusqu'à ce que, la barre 34 occupant la position engagée, le galet 188 sollicité par le ressort 190 s'engage dans le deuxième cran 186.

La barre 34 est maintenue par les moyens 180 de blocage dans la position engagée jusqu'à ce que les moyens 40 d'actionnement soient commandés pour effectuer la course inverse, de la position engagée vers la position non-engagée afin notamment de permettre l'ouverture de l'unité 10 de moulage.

Avantageusement, les moyens 180 de blocage permettent de bloquer la barre 34 dans chacune des positions, dans la position engagée et dans la position non-engagée.

Les moyens 80, 180 de blocage de la barre 34 des moyens 30 de compensation interviennent indépendamment des moyens 40 d'actionnement, notamment de la coopération ou non du galet 44 avec une came.

Bien entendu, les moyens 80, 180 de blocage peuvent être supprimés notamment si les moyens 30 de compensation sont commandés systématiquement et assurent ainsi tant le maintien en position engagée de la barre 34 que le verrouillage en position fermée de l'unité 10 de moulage.

## Revendications

1. Unité (10) de moulage d'au moins un récipient à partir d'une préforme en matière thermoplastique, ladite unité (10) de moulage comportant au moins :
- un moule (12) comportant au moins deux éléments (14) de moulage montés respectivement dans deux porte-moules (16), l'un au moins des porte-moules (16) étant monté mobile en rotation par rapport à l'autre autour d'un axe (O) de rotation et pouvant être déplacé entre une position ouverte et une position fermée de l'unité (10), position fermée dans laquelle les éléments (14) de moulage sont réunis suivant un plan (P) de joint et délimitent une cavité (20) de moulage,
- des moyens de soufflage ou d'étirage-soufflage pour introduire à l'intérieur de la préforme au moins un fluide de soufflage sous pression en vue du moulage du récipient correspondant dans la cavité (20),
- des moyens de verrouillage de l'unité (10) susceptibles d'occuper au moins :
• une position verrouillée dans laquelle les porte-moules (16) de l'unité (10) de moulage sont maintenus dans ladite position fermée, et
• une position déverrouillée dans laquelle les porte-moules (16) de l'unité (10) de moulage sont mobiles par rapport à l'autre,
- et des moyens (30) de compensation commandés pour exercer, au moyen d'un fluide sous pression, un effort de compensation tendant à serrer l'un contre l'autre les éléments (14) de moulage au niveau du plan (P) de joint et à s'opposer aux efforts que ledit au moins un fluide de soufflage sous pression exerce sur les éléments (14) de moulage lors du moulage d'un récipient à partir d'une préforme,
**caractérisée en ce que** les moyens (30) de compensation agissent sur les porte-moules (16) pour les serrer l'un contre l'autre en position fermée de l'unité (10) de moulage et exercer ledit effort de compensation.

2. Unité selon la revendication 1, **caractérisée en ce que** les moyens (30) de compensation exercent ledit effort de compensation à proximité de chacun des bords libres des porte-moules (16) situés à l'opposé de l'axe (O) de rotation.

3. Unité selon la revendication 2, **caractérisée en ce que** les moyens (30) de compensation comportent au moins un vérin (32) solidaire du bord libre de l'un des porte-moules (16) et qui est apte à exercer sélectivement ledit effort de compensation sur un organe (34) de serrage relié au bord libre de l'autre des porte-moules (16).

4. Unité selon la revendication 3, **caractérisée en ce que** les moyens (30) de compensation comportent au moins deux biellettes (36) dont une première extrémité est solidaire de l'organe (34) de serrage constitué par une barre et dont une deuxième extrémité est montée pivotante autour d'un arbre (38) formant un axe (A) de pivotement qui, parallèle à l'axe (O) de rotation du moule (12), est situé sur le bord libre de l'autre des porte-moules (16).

5. Unité selon la revendication 4, **caractérisée en ce que** la barre (34) pivotante est déplacée sélectivement par des moyens (40) d'actionnement associés entre au moins :
- une position non-engagée, et
- une position engagée qui est susceptible d'être occupée après fermeture préalable de l'unité (10) et dans laquelle ledit au moins un vérin (32) est apte à exercer sur la barre (34) ledit effort de compensation.

6. Unité selon la revendication 3, **caractérisée en ce que** ledit au moins un vérin (32) comporte un piston (50) qui est monté coulissant de manière étanche dans un alésage (52) dans lequel le piston (50) délimite une chambre (54) de commande à volume variable.

7. Unité selon la revendication 6, **caractérisée en ce que** la chambre (54) de commande du vérin (32) est alimentée en fluide sous pression pour provoquer le déplacement du piston (50) d'une position de repos vers une position de travail dans laquelle une face (62) proximale d'appui du piston (50) applique sur la barre (34) située en vis-à-vis ledit effort de compensation.

8. Unité selon la revendication 7, **caractérisée en ce que** l'effort de compensation exercé par les moyens (30) de compensation pour serrer les porte-moules (16) en position fermée est inférieur à l'effort exercé à l'intérieur de la cavité (20) par le fluide de soufflage sous pression lors du moulage d'un récipient à partir d'une préforme.

9. Unité selon l'une des revendications 4 à 8, **caractérisée en ce que** la barre (34) exerce un effort de traction sur l'autre porte-moule (16) auquel les biellettes (36) la relient lorsque, en position de travail, le piston (50) exerce sur la barre (34) ledit effort de compensation, de l'intérieur vers l'extérieur de l'unité (10), suivant une direction qui est orthogonale par rapport au plan (P) de joint du moule (12).

10. Unité selon l'une quelconque des revendications précédentes, **caractérisée en ce que** les moyens (30) de compensation constituent les moyens de verrouillage de l'unité (10) de moulage.

11. Unité selon l'une quelconque des revendications 5 à 10, **caractérisée en ce que** l'unité (10) comporte des moyens (80, 180) de blocage de l'organe (34) de serrage des moyens (30) de compensation pour maintenir ledit organe (34) de serrage au moins dans sa position engagée.

12. Unité selon l'une quelconque des revendications précédentes, **caractérisée en ce que** le fluide sous pression utilisé avec les moyens (30) de compensation est un fluide hydraulique.

## Patentansprüche

1. Einheit (10) zum Formen mindestens eines Behälters ausgehend von einem Vorformling aus Thermoplast, wobei die Formeinheit (10) mindestens aufweist:
- ein Formwerkzeug (12), das mindestens zwei Formelemente (14) aufweist, die in zwei Formwerkzeugträger (16) montiert sind, wobei mindestens einer der Formwerkzeugträger (16) bezüglich des anderen um eine Drehachse (O) drehbeweglich montiert ist und zwischen einer offenen Stellung und einer geschlossenen Stellung der Einheit (10) verschoben werden kann, geschlossene Stellung, in der die Formelemente (14) gemäß einer Verbindungsebene (P) miteinander verbunden sind und einen Formhohlraum (20) begrenzen,
- Blas- oder Streck-Blas-Einrichtungen, um ins Innere des Vorformlings mindestens ein unter Druck stehendes Blasfluid zum Formen des entsprechenden Behälters im Hohlraum (20) einzuführen,
- Verriegelungseinrichtungen der Einheit (10), die mindestens einnehmen können:
• eine verriegelte Stellung, in der die Formwerkzeugträger (16) der Formeinheit (10) in der geschlossenen Stellung gehalten werden, und
• eine entriegelte Stellung, in der die Formwerkzeugträger (16) der Formeinheit (10) zueinander beweglich sind,
- und Kompensationseinrichtungen (30), die gesteuert werden, um mittels eines unter Druck stehenden Fluids eine Kompensationskraft auszuüben, die dahin tendiert, die Formelemente (14) im Bereich der Verbindungsebene (P) gegeneinander zu klemmen und den Kräften entgegenzuwirken, die das mindestens eine unter Druck stehende Blasfluid beim Formen eines Behälters ausgehend von einem Vorformling auf die Formelemente (14) ausübt,
**dadurch gekennzeichnet, dass** die Kompensationseinrichtungen (30) auf die Formwerkzeugträger (16) einwirken, um sie in der geschlossenen Stellung der Formeinheit (10) gegeneinander zu klemmen und die Kompensationskraft auszuüben.

2. Einheit nach Anspruch 1, **dadurch gekennzeichnet, dass** die Kompensationseinrichtungen (30) die Kompensationskraft in der Nähe jedes der freien Ränder der Formwerkzeugträger (16) ausüben, die sich gegenüber der Drehachse (O) befinden.

3. Einheit nach Anspruch 2, **dadurch gekennzeichnet, dass** die Kompensationseinrichtungen (30) mindestens einen Zylinder (32) aufweisen, der fest mit dem freien Rand eines der Formwerkzeugträger (16) verbunden ist und die Kompensationskraft selektiv auf ein mit dem freien Rand des anderen der Formwerkzeugträger (16) verbundenes Klemmelement (34) ausüben kann.

4. Einheit nach Anspruch 3, **dadurch gekennzeichnet, dass** die Kompensationseinrichtungen (30) mindestens zwei Verbindungsstangen (36) aufweisen, von denen ein erstes Ende fest mit dem aus einer Stange bestehenden Klemmelement (34) verbunden ist, und von denen ein zweites Ende um eine Welle (38) schwenkbar montiert ist, die eine Schwenkachse (A) bildet, die sich parallel zur Drehachse (O) des Formwerkzeugs (12) auf dem freien Rand des anderen der Formwerkzeugträger (16) befindet.

5. Einheit nach Anspruch 4, **dadurch gekennzeichnet, dass** die Schwenkstange (34) von zugeordneten Betätigungseinrichtungen (40) selektiv verschoben wird zwischen mindestens:
- einer nicht eingerückten Stellung, und
- einer eingerückten Stellung, die nach dem vorhergehenden Schließen der Einheit (10) eingenommen werden kann und in der der mindestens eine Zylinder (32) die Kompensationskraft auf die Stange (34) ausüben kann.

6. Einheit nach Anspruch 3, **dadurch gekennzeichnet, dass** der mindestens eine Zylinder (32) einen Kolben (50) aufweist, der dicht gleitend in eine Bohrung (52) montiert ist, in der der Kolben (50) eine Steuerkammer (54) mit variablem Volumen begrenzt.

7. Einheit nach Anspruch 6, **dadurch gekennzeichnet, dass** die Steuerkammer (54) des Zylinders (32) mit unter Druck stehendem Fluid versorgt wird, um die Verschiebung des Kolbens (50) von einer Ruhestellung in eine Arbeitsstellung zu bewirken, in der eine proximale Auflageseite (62) des Kolbens (50) die Kompensationskraft auf die gegenüber befindliche Stange (34) ausübt.

8. Einheit nach Anspruch 7, **dadurch gekennzeichnet, dass** die von den Kompensationseinrichtungen (30) zum Klemmen der Formwerkzeugträger (16) in geschlossener Stellung ausgeübte Kompensationskraft geringer ist als die im Inneren des Hohlraums (20) vom unter Druck stehenden Blasfluid beim Formen eines Behälters ausgehend von einem Vorformling ausgeübte Kraft.

9. Einheit nach einem der Ansprüche 4 bis 8, **dadurch gekennzeichnet, dass** die Stange (34) eine Zugkraft auf den anderen Formwerkzeugträger (16) ausübt, mit dem die Verbindungsstangen (36) sie verbinden, wenn in der Arbeitsstellung der Kolben (50) auf die Stange (34) die Kompensationskraft von der Innen- zur Außenseite der Einheit (10) gemäß einer Richtung ausübt, die bezüglich der Verbindungsebene (P) des Formwerkzeugs (12) orthogonal ist.

10. Einheit nach einem der vorhergehenden Ansprüche, **dadurch gekennzeichnet, dass** die Kompensationseinrichtungen (30) die Verriegelungseinrichtungen der Formeinheit (10) bilden.

11. Einheit nach einem der Ansprüche 5 bis 10, **dadurch gekennzeichnet, dass** die Einheit (10) Blockiereinrichtungen (80, 180) des Klemmelements (34) der Kompensationseinrichtungen (30) aufweist, um das Klemmelement (34) mindestens in seiner eingerückten Stellung zu halten.

12. Einheit nach einem der vorhergehenden Ansprüche, **dadurch gekennzeichnet, dass** das mit den Kompensationseinrichtungen (30) verwendete unter Druck stehende Fluid ein hydraulisches Fluid ist.

## Claims

1. Unit (10) for moulding at least one container from a preform made of thermoplastic material, said moulding unit (10) having at least:
- a mould (12) having at least two moulding elements (14) mounted respectively in two mould holders (16), at least one of the mould holders (16) being rotatably mounted with respect to the other about an axis (O) of rotation and being able to be moved between an open position and a closed position of the unit (10), in which closed position the moulding elements (14) are joined together in a parting plane (P) and delimit a moulding cavity (20),
- blow-moulding or stretch-blow-moulding means for introducing into the preform at least one pressurized blow-moulding fluid in order to mould the corresponding container in the cavity (20),
- means for locking the unit (10) that are able to take up at least:
• a locked position in which the mould holders (16) of the moulding unit (10) are kept in said closed position, and
• an unlocked position in which the mould holders (16) of the moulding unit (10) are movable with respect to one another,
- compensation means (30) that are made to exert, by means of a pressurized fluid, a compensation force that tends to clamp the moulding elements (14) against one another in the parting plane (P) and to oppose the forces that said at least one pressurized blow-moulding fluid applies to the moulding elements (14) during the moulding of a container from a preform,
**characterized in that** the compensation means (30) act on the mould holders (16) in order to clamp them against one another in the closed position of the moulding unit (10) and to exert said compensation force.

2. Unit according to Claim 1, **characterized in that** the compensation means (30) exert said compensation force in the vicinity of each of the free edges of the mould holders (16) that are situated away from the axis (O) of rotation.

3. Unit according to Claim 2, **characterized in that** the compensation means (30) comprise at least one cylinder (32) that is secured to the free edge of one of the mould holders (16) and is able to selectively apply said compensation force to a clamping member (34) connected to the free edge of the other of the mould holders (16).

4. Unit according to Claim 3, **characterized in that** the compensation means (30) comprise at least two tie rods (36), a first end of which is secured to the clamping member (34) formed by a bar and a second end of which is mounted so as to pivot about a shaft (38) forming a pivot axis (A) which, parallel to the axis (O) of rotation of the mould (12), is situated on the free edge of the other of the mould holders (16).

5. Unit according to Claim 4, **characterized in that** the pivoting bar (34) is moved selectively by associated actuating means (40) between at least:
- a disengaged position, and
- an engaged position which is able to be taken up after the unit (10) has been closed and in which said at least one cylinder (32) is able to apply said compensation force to the bar (34).

6. Unit according to Claim 3, **characterized in that** said at least one cylinder (32) has a piston (50) which is mounted so as to slide in a sealed manner in a bore (52) in which the piston (50) delimits a variable-volume control chamber (54).

7. Unit according to Claim 6, **characterized in that** the control chamber (54) of the cylinder (32) is supplied with pressurized fluid so as to cause the piston (50) to move from a rest position to a working position in which a proximal bearing face (62) of the piston (50) applies said compensation force to the bar (34) situated opposite.

8. Unit according to Claim 7, **characterized in that** the compensation force exerted by the compensation means (30) in order to clamp the mould holders (16) in the closed position is lower than the force exerted inside the cavity (20) by the pressurized blow-moulding fluid during the moulding of a container from a preform.

9. Unit according to one of Claims 4 to 8, **characterized in that** the bar (34) exerts a pulling force on the other mould holder (16) to which the tie rods (36) connect it when, in the working position, the piston (50) applies said compensation force to the bar (34), from the inside to the outside of the unit (10), in a direction that is orthogonal to the parting plane (P) of the mould (12) .

10. Unit according to any one of the preceding claims, **characterized in that** the compensation means (30) make up the locking means of the moulding unit (10).

11. Unit according to any one of Claims 5 to 10, **characterized in that** the unit (10) has means (80, 180) for immobilizing the clamping member (34) of the compensation means (30) in order to keep said clamping member (34) at least in its engaged position.

12. Unit according to any one of the preceding claims, **characterized in that** the pressurized fluid used with the compensation means (30) is a hydraulic fluid.
